(19) **Europäisches Patentamt**
**European Patent Office**
**Office européen des brevets**

(11) **EP 1 453 038 B1**

(12) **EUROPEAN PATENT SPECIFICATION**

(45) Date of publication and mention
of the grant of the patent:
**28.02.2007 Bulletin 2007/09**

(51) Int Cl.:
**G11B 5/66** (2006.01)

(21) Application number: **03255442.0**

(22) Date of filing: **01.09.2003**

(54) **Magnetic recording media with write-assist layer**

Magnetische Aufzeichnungsmaterialien die eine Schreibhilfsschicht enthalten

Moyens d' enregistrement magnétique avec couche d' aide a l'écriture

(84) Designated Contracting States:
**DE FR GB**

(30) Priority: **26.02.2003 US 375222**

(43) Date of publication of application:
**01.09.2004 Bulletin 2004/36**

(73) Proprietor: **Hitachi Global Storage Technologies Netherlands B.V.**
**1075 AE Amsterdam (NL)**

(72) Inventors:
• **Berger, Andreas K. D.**
**Hitachi Global Storage Tech**
**5600 Cottle Road**
**San Jose**
**CA 95193 (US)**

• **Do, Hoa Van**
**Hitachi Global Storage Tech**
**5600 Cottle Road**
**San Jose**
**CA 95193 (US)**
• **Fullerton, Eric E.**
**Hitachi Global Storage Tech**
**5600 Cottle Road**
**San Jose**
**CA 95193 (US)**

(74) Representative: **Calderbank, Thomas Roger et al**
**Mewburn Ellis LLP**
**York House**
**23 Kingsway**
**London WC2B 6HP (GB)**

(56) References cited:
WO-A-02/09098          DE-A- 10 026 050
JP-A- 2002 092 841      US-A- 6 007 924
US-A1- 2002 086 184    US-B1- 6 383 667
US-B1- 6 468 670

EP 1 453 038 B1

## Description

This invention relates generally to magnetic recording media, and more particularly to a media structure that has improved writability without a decrease in thermal stability.

Magnetic recording media structures for hard disk drives typically include a rigid substrate, such as glass or aluminum-magnesium disk with a surface coating (e.g., NiP), one or more underlayers or seed layers, the magnetic layer, and a protective disk overcoat. A typical disk structure with a quaternary CoPtCrB single magnetic layer is described in U.S. Patent 6,187,408. In addition to a magnetic layer of a conventional single magnetic layer, a more recent type of magnetic layer structure is an antiferromagnetically-coupled (AFC) magnetic layer (as described in U.S. Patent 6,280,813). It is also to known to reduce the intrinsic media noise, i.e., improve the signal-to-noise ratio (SNR), by laminating the magnetic layer. In a "low-noise" laminated magnetic layer two or more magnetic films are decoupled by a nonmagnetic spacer layer. A conventional laminated magnetic layer with two magnetic films is described in U.S. Patent 5,051,288. A laminated AFC magnetic layer with a single magnetic film and an AFC magnetic layer separated by a nonmagnetic spacer layer is described in published U.S. patent application US 2002/0098390 A1. U.S. Patent 6,007,924 describes a magnetic recording disk with a laminated magnetic layer that uses a paramagnetic spacer layer between and in contact with the magnetic films.

Magnetic recording media, such as used in hard disk drives, face the fundamental challenge that further increases in areal density cannot be achieved by a simple down-scaling of all dimensions, i.e., the reduction of media grain sizes, because even at product densities of approximately $54 \times 10^3$ Gbit/m$^2$ (35 Gbit/in$^2$) the grains are near the stability limit at which thermal erasure of written bit patterns occur (the "superparamagnetic" limit). It is possible to compensate for the reduced magnetic stability due to the reduced grain volume V by increasing the magnetic anisotropy $K_u$ because the total energy barrier that governs the thermal stability is given by the product $K_u V$. However, the write field $H_0$ from the magnetic recording head, which is necessary to write the desired information into the magnetic media, is also proportional to $K_u$ and limits the use of high $K_u$ materials. Thus, the fundamental problem of ultra-high density media stability is intimately connected with the problem of writability, because both quantities are governed by the same media parameter $K_u$. Writability demands that $K_u$ stays below a certain threshold value to allow for reliable bit pattern writing, whereas the long-term stability of recorded information requires $K_u$ to be above another threshold value. Thus, one of the fundamental problems for future ultra-high density media arises from the fact that writability and stability put contradictory requirements on the magnetic anisotropy $K_u$, because both properties are equally dependent on $K_u$.

Thus what is needed is a magnetic recording media that breaks the dependency of the write field from the magnetic anisotropy while leaving all other key magnetic and recording properties substantially unchanged.

US-A-2002-0086184 discloses a magnetic recording medium of the perpendicular recording medium of the perpendicular type in which a soft magnetic underlayer and a recording layer of cobalt or a noble metal are stacked on a substrate. The recording layer may include an initial paramagnetic layer.

According to the present invention there is provided a magnetic recording medium comprising:

a substrate;
a recording layer on the substrate and comprising a ferromagnetic material having a remanent magnetic moment after exposure to an applied magnetic field; and
a write assist layer on the substrate and comprising a ferromagnetic material in a paramagnetic state, the write assist layer having a thickness greater than 1 nm, the write assist layer and the recording layer being in contact and exchange coupled.

Thus, the magnetic recording disk has a ferromagnetic recording layer and a "paramagnetic" write assist layer in contact and exchange coupled with the ferromagnetic recording layer. The write assist layer is a ferromagnetic material that has a Curie temperature less than the operating temperature of the disk drive so that at operating temperature and in the absence of a write field, the write assist layer is in its paramagnetic state and has no remanent magnetization. Thus after the data have been written and there is no longer a write field present, the magnetization in the write assist layer is suppressed due to its paramagnetic nature, and the magnetic state of the disk and the stability of the written bit pattern are governed essentially by the properties of the ferromagnetic layer alone. However, when a write field is applied in a direction opposite to the magnetization in previously written regions of the ferromagnetic recording layer, the write assist layer exhibits a magnetization aligned with the write field. Because the write assist layer is exchange coupled with the ferromagnetic recording layer the write layer's magnetization assists the write field in reversing the magnetization in the ferromagnetic recording layer. The write assist layer allows higher anisotropy materials to be used in the ferromagnetic recording layer, which results in improved media thermal stability, because it reduces the effective anisotropy of the ferromagnetic recording layer during writing.

For a fuller understanding of the nature and advantages of the present invention, reference should be made to the following detailed description taken together with the accompanying figures.

In the drawings:

FIG 1A shows the media structure, and associated magnetization directions or magnetic moments, according to the present invention in the absence of an applied write field.

FIG 1B shows the media structure, and associated magnetization directions or magnetic moments, according to the present invention in the presence of an applied write field.

FIG. 2 shows the magnetization of the MAG layer and p-WAL in the media structure according to the present invention throughout the thickness of the structure with and without an applied write field.

FIG. 3A shows the product of coercive field $H_C$ and the remanence-thickness product Mrt as a function of the Curie temperature $T_C$ of the p-WAL in the media structure for different orientations of the applied field relative to the easy axis of magnetization.

FIG. 3B shows the switching field $H_0$ as a function of the Curie temperature $T_C$ of the p-WAL in the media structure for different orientations of the applied field relative to the easy axis of magnetization.

FIG. 4A shows the magnetic phase diagram of CoCr bulk alloys as a function of Cr composition in atomic percent (at.%) and temperature.

FIG. 4B shows several magnetic hysteresis loops at different temperatures for a CoCr film (31 at.% Cr) grown on a conventional disk media underlayer structure.

FIG. 5A is a sectional schematic of the AFC embodiment of the present invention with the p-WAL on top of the second magnetic film of the AFC magnetic layer.

FIG. 5B is a sectional schematic of the AFC embodiment of the present invention with the p-WAL beneath the second magnetic film of the AFC magnetic layer.

FIG. 6A is a graph of switching field $H_0$ as a function of p-WAL thickness for the configuration of FIG. 5A.

FIG. 6B is a graph of magnetic anisotropy -grain volume product ($K_u V$) as a function of p-WAL thickness for the configuration of FIG. 5A.

FIG. 7A is a graph of overwrite in dB as a function of p-WAL thickness for two compositions of CoCr p-WAL materials.

FIG. 7B is a graph showing the comparison of overwrite in dB as a function of write current for a conventional media and a p-WAL media structure according to the present invention.

FIG. 8A is a sectional schematic of the low-noise laminated media embodiment of the present invention with the p-WAL layer below the spacer layer and on top of the lower magnetic film of the laminated magnetic layer.

FIG. 8B is a sectional schematic of the laminated AFC embodiment of the present invention with the p-WAL layer below the spacer layer and on top of the top magnetic film of the AFC magnetic layer.

A purely paramagnetic material is one whose atoms do have permanent dipole moments, but ferromagnetism is not active. If a magnetic field is applied to such a material, the dipole moments try to line up with the magnetic field, but are prevented from becoming perfectly aligned by their random thermal motion. Because the dipoles try to line up with the applied field, the susceptibilities of such materials are positive, but in the absence of the strong ferromagnetic effect, the susceptibilities are rather small. When a paramagnetic material is placed in a strong external applied magnetic field, it exhibits a magnetic moment as long as the applied field is present. The magnetic moment is parallel and proportional to the size of the applied field but is much weaker than in ferromagnetic materials. When the applied field is removed, the net magnetic alignment is lost as the dipoles relax back to their normal random motion, and the paramagnetic material has no remanent magnetic moment. Pt and A1 are examples of known conventional purely paramagnetic materials.

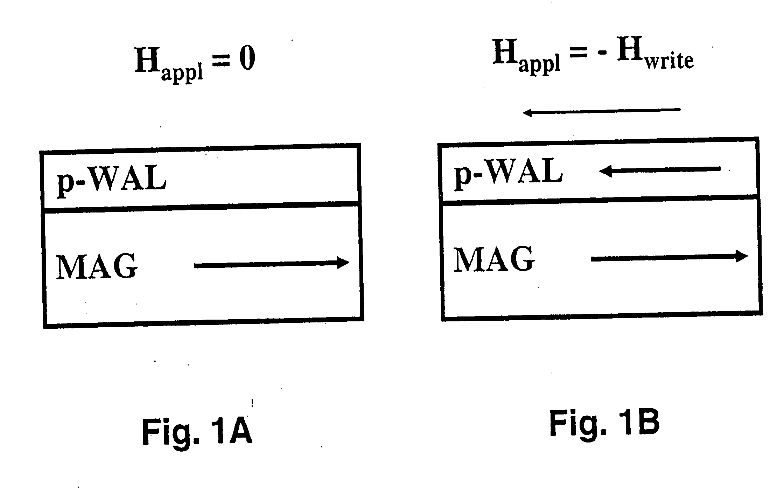

Besides purely paramagnetic materials, there also exists the paramagnetic state of ferromagnetic materials. Above a certain temperature, the so-called Curie temperature, ferromagnetic materials become paramagnetic, i.e., the material becomes magnetically disordered even though the ordering force, the ferromagnetic exchange coupling, is still present, but it is not sufficient to align the magnetic dipoles. Thus in the paramagnetic state the material has no remanent magnetic moment, i.e., no moment in zero applied magnetic field. Such a paramagnet (the paramagnetic state of a ferromagnet) exhibits all the above-mentioned properties of a conventional paramagnet, in particular the linear field dependence of the magnetization in the presence of an applied magnetic field. However, due to the still active ordering force, this field dependence of the magnetization is much stronger than in conventional paramagnets. Furthermore, such a "non-conventional" paramagnet can be strongly coupled (via the direct exchange coupling force) to a conventional ferromagnet once brought into direct contact, which allows the layers to mutually influence each other. FIGS. 1A-1B show a schematic of the media structure according to the present invention with this type of non-conventional paramagnet as a write-assist layer (p-WAL) ferromagnetically exchange coupled to a conventional ferromagnetic layer (MAG).

Fundamentally, the structure comprises two layers: the ferromagnetic or magnetic recording layer (MAG) and the p-WAL. Not shown in the-schematic of FIGS. 1A-1B are the conventional well-known hard disk substrate, typically Al-Mg with a surface coating or glass, the underlayers (UL) and/or seed layers for the MAG layer, and the protective disk overcoat (OC), typically diamond-like amorphous carbon. In this structure, the p-WAL and the MAG layer are in direct contact with one another, which allows for a sufficiently strong ferromagnetic exchange coupling between the layers. The material of the p-WAL is a ferromagnetic material that is capable of being exchange coupled ferromagnetically with the MAG layer but is paramagnetic at the operating temperature of the disk drive, i.e., it has a Curie temperature less than the operating temperature of the disk drive.

Under storage conditions, i.e., after the data have been written, shown on the left-hand side in FIG. 1A, the applied magnetic write field $H_{appl}$ is zero (or very small) and the magnetic moment or magnetization in the p-WAL is suppressed due to its paramagnetic nature. Thus, under storage conditions the magnetic state of the media is given essentially by the MAG layer alone, as shown in FIG. 1A by the direction of the remanent magnetic moment in regions of the MAG layer previously exposed to the write field, and the stability of a written bit pattern is governed by the $K_u$ value of the MAG layer alone.

When a write field $H_{appl}$ is applied in a direction opposite to the magnetization in the previously written regions of the MAG layer for the purpose of reversing the MAG layer magnetization, i.e., the writing process, the p-WAL layer builds up a magnetic moment

$$M_{WAL} = X \cdot H_{appl} \qquad (1)$$

proportional to the p-WAL susceptibility X and aligned in the direction of the write field, as shown by the arrow in the p-WAL layer in FIG. 1B. In this state, i.e., prior to the magnetic reversal of the moments in the MAG layer regions, the magnetization of the ferromagnetic MAG layer is antiparallel to the magnetization of the p-WAL, as shown by the arrows in FIG. 1B. However, this state is energetically unfavorable because it increases the ferromagnetic interlayer exchange energy

$$E_{ex} = -J_I \cdot M_{WAL} \cdot M_{MAG} \qquad (2)$$

that is being mediated by the interface exchange coupling $J_I$ between the p-WAL and MAG layers. Therefore, there is an effective negative exchange field of the order of

$$H_{ex} = -\frac{|J_I \cdot M_{WAL}|}{t_{MAG}} \qquad (3)$$

acting upon the MAG layer of thickness $t_{MAG}$ in addition to the externally applied field $H_{appl}$. Consequently, the MAG layer switching field is no longer governed by the ratio of the MAG-layer anisotropy and magnetization

$$H_0 = \frac{2K_u}{M_{MAG}} \qquad (4)$$

alone, but includes a term proportional to the exchange field, which can be interpreted as a reduction of the effective high-field anisotropy $K_{eff}(H)$

$$K_{eff}(H) = K_u - \frac{|E_{ex}(H)|}{2 \cdot t_{MAG}} \qquad (5).$$

Thus, by means of the p-WAL, the anisotropy $K_u$, which governs the media stability, and the anisotropy $K_{eff}$, which determines the necessary write field, have been decoupled.

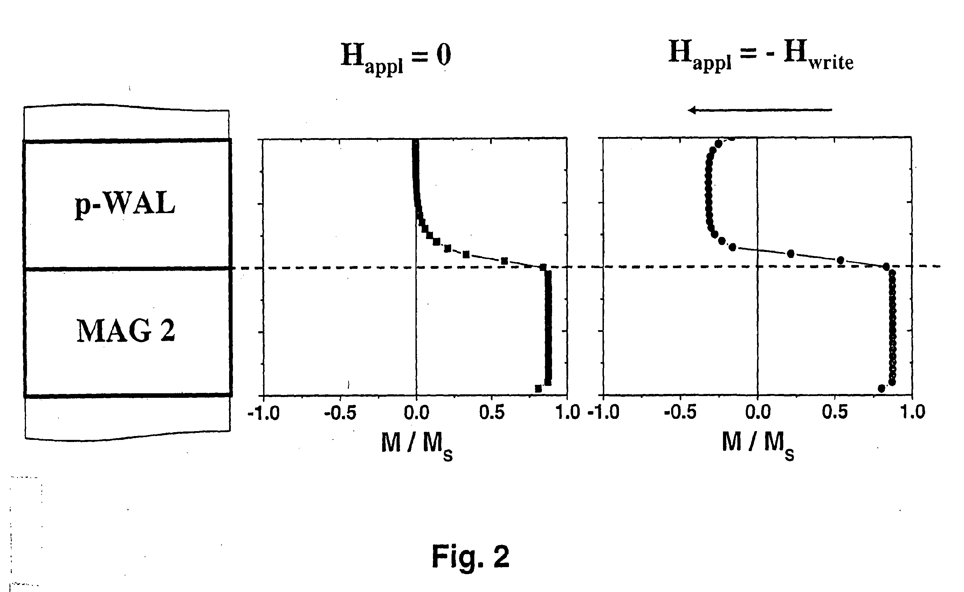

FIG. 2 shows the detailed structure of magnetization profiles occurring throughout the thickness of the p-WAL media for the cases with and without the applied magnetic write field. These profiles have been theoretically determined by using a thermodynamic mean-field approach, and the results fully corroborate the basic physical picture discussed above. For the write field case (right side of FIG. 2) a relatively strong negative magnetization builds up in the p-WAL, which aids the reversal process. For the field-free case (left side of FIG. 2), the magnetization in the p-WAL goes to zero except in a very thin interface region, in which the ferromagnetic MAG layer polarizes the p-WAL. This non-zero magnetization in the p-WAL in zero applied field is due to the ferromagnetic exchange coupling between the p-WAL and the MAG layer. The magnetization value in this thin interface region dies out exponentially with distance away from the interface and does not significantly increase the remanent magnetization. This is of fundamental importance because a large increase of the remanent magnetization has been found to deteriorate other important recording properties like signal-to-noise ratio (SNR) and the pulse width at half-maximum amplitude ($PW_{50}$) of the isolated readback pulse.

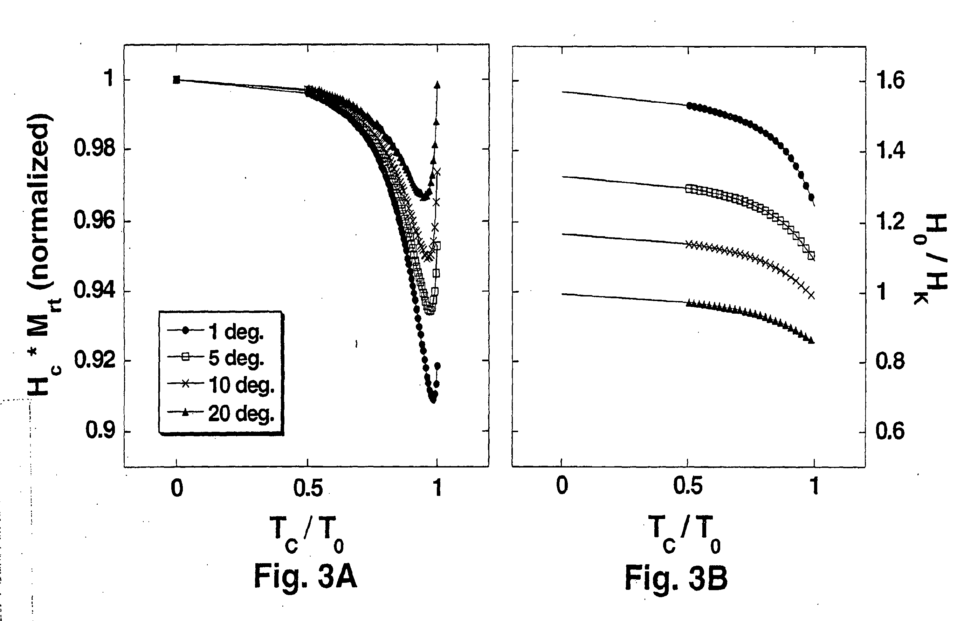

The theoretical calculations allow a quantitative estimate of the effectiveness of the p-WAL and aid the selection process for finding a suitable material. The extent of the field-induced magnetization build-up in the p-WAL and the associated write-assistance effect strongly increase with the susceptibility of the p-WAL material. This can be seen in FIG. 3B, where the calculated switching field $H_0$ of a p-WAL media structure is shown as a function of the Curie temperature $T_C$. For all field orientation angles relative to the easy axis of magnetization, the switching field decreases upon increasing $T_C$, as shown in FIG.3B, thereby indicating that it is best for the write-assist effect to choose a non-conventional paramagnet with a Curie temperature $T_C$ less than the disk operating temperature $T_0$. Detailed theoretical calcula-

tions indicate that it is best to aim for a p-WAL material with a $T_C$ of approximately 0.95 $T_0$. The upper and lower disk drive operating temperatures are preselected or specified by the disk drive manufacturer. The typical operating temperature range for a disk drive is approximately 280-340 K, so $T_C$ should be less than approximately 280 K, or the lowest preselected disk drive operating temperature. For p-WAL materials with an even higher Curie temperature, the write assist effect could be larger, but this advantage would be overcompensated by an even stronger increase in the remanent magnetization, which will ultimately lead to the deterioration of media properties like SNR and $PW_{50}$. As a quantitative estimate of the p-WAL performance, FIG. 3A shows the product of coercive field $H_C$ and the remanence-thickness product Mrt. Both properties should be as small as possible for given MAG layer properties, which means that the minimum of $H_C$*Mrt gives good guidance for choosing a high-performing p-WAL material. From FIG. 3A, it can be seen that $H_0$*Mrt is optimized for $T_C$ = 0.90 - 0.98 $T_0$, depending on the applied field angle, i.e., for a paramagnetic, but nearly ferromagnetic p-WAL material. The data in FIGS. 3A-3B also reveal that the write assist effect produced by the p-WAL is larger for magnetic grains that are aligned along the write-field direction, which are generally more difficult to switch. Thus, the calculations indicate that the p-WAL not only aids the write process overall, but also improves other important write characteristics by sharpening the switching field distribution and increasing the overwrite value.

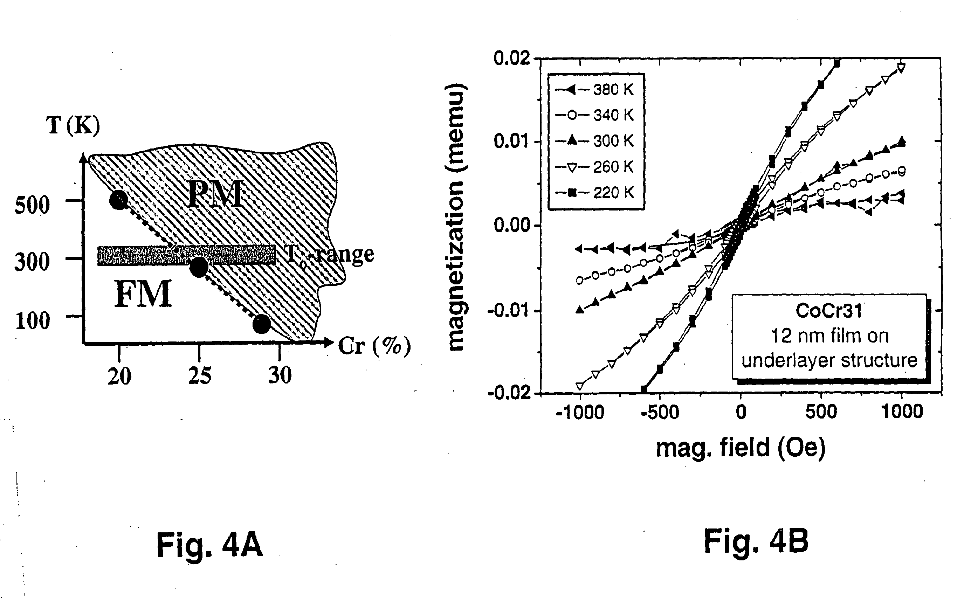

From the above discussion, it is evident that any ferromagnetic material with a Curie temperature below the lowest disk operating temperature might in principle be suitable as a p-WAL. However, media structures as shown in FIG. 1 with CoCr alloys as the p-WAL were fabricated and tested because all presently used high-performance MAG-layers are CoCr based quaternary alloys (typically CoPtCrB or CoPtCrTa) and potential complications related to the actual deposition and manufacturing processes which might result from lattice mismatch, growth and chemical segregation issues, should be minor. FIG. 4A shows the magnetic phase diagram of CoCr bulk alloys as a function of Cr composition and temperature. See F. Bolzoni, et al., *Journal of Magnetism and Magnetic Materials* **31-34,** 845-846 (1983); J. E. Snyder and M. H. Kryder, *Journal of Applied Physics* **73**, 5551-5553 (1993).

FIG. 4B shows several magnetic hysteresis loops for a CoCr film (31 at.% Cr) grown on a conventional disk media underlayer structure. The data demonstrate the paramagnetic nature of such CoCr alloys, i.e., that there is a strong temperature dependence of the low field susceptibility and virtually no remanent magnetic moment. In addition, it is desirable to adjust $T_C$ of the p-WAL alloy in such a way that it produces a maximum effect at low disk drive temperatures. The data indicate that CoCr with 31 at.% Cr is close to achieving just that.

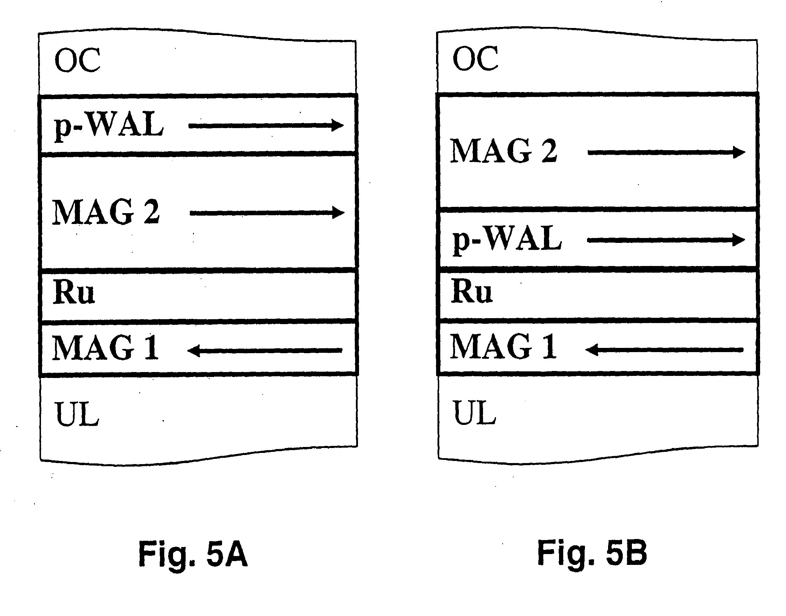

FIG. 5 shows the p-WAL media structures that have been implemented. Both structures use the antiferromagnetically-coupled (AFC) structure as the magnetic layer plus the p-WAL in direct contact with the second magnetic film (MAG 2) of the AFC structure. AFC media are described in U.S. 6,280,813 and comprise two magnetic films (MAG1 and MAG2) separated by an anti ferromagnetic coupling film or interlayer, typically formed of ruthenium (Ru). In the configuration of FIG. 5A, the p-WAL is sputter deposited on top of the MAG 2 film, whereas in configuration of FIG. 5B, the p-WAL is located beneath the MAG 2 film, and sputter deposited on top of the Ru interlayer. For both geometries, the basic AFC structure and AFC mode of media functionality is not disturbed and has been experimentally verified.

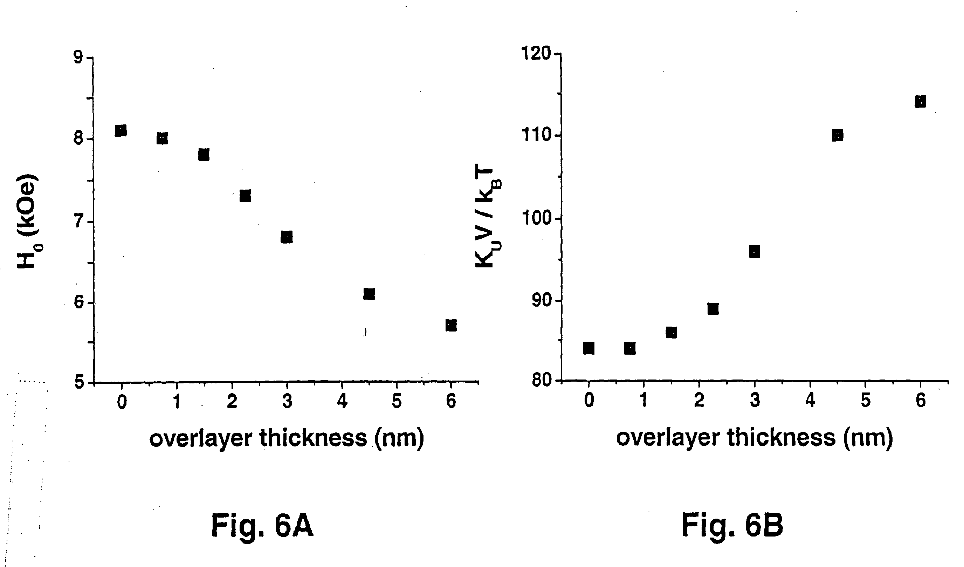

For a test structure based on the configuration of FIG. 5A, the dependence of the switching field $H_0$ (FIG. 6A) and anisotropy-grain volume product $K_uV$ (FIG. 6B) are shown as a function of p-WAL overlayer thickness. For a p-WAL overlayer thickness larger than approximately 1 to 1.5 nm a substantial reduction of the necessary write field $H_0$ occurs without compromising the zero-field stability, which can be inferred from the corresponding $K_uV$-data. $K_uV$, a key stability indicator, is actually increased due to the added p-WAL. Signal decay measurements corroborate these findings by showing no degradation of media stability due to the added p-WAL.

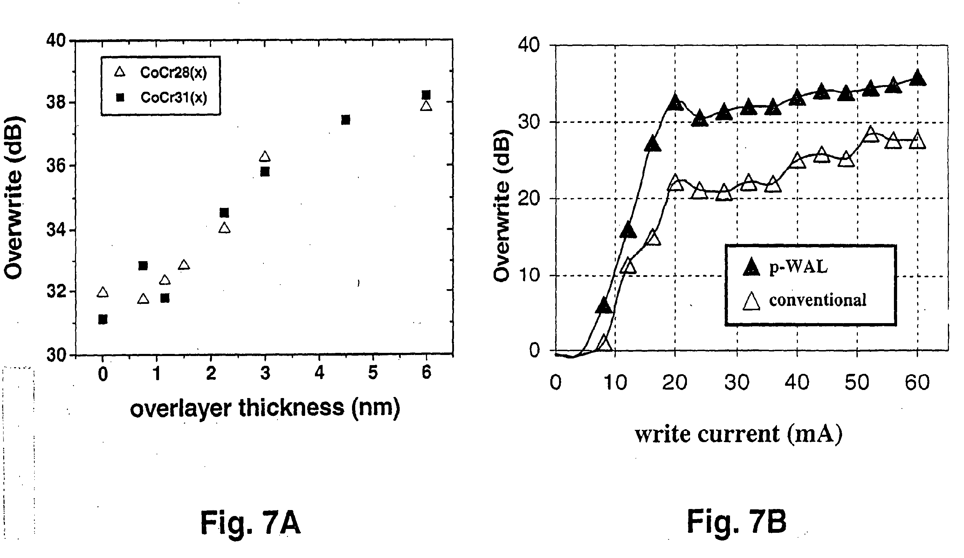

FIG. 7A shows the p-WAL thickness dependence of the overwrite (OW), which basically resembles the p-WAL thickness dependences of $H_0$ in FIG. 6A. For p-WAL thicknesses larger than 1.5 nm, a substantial improvement in OW is observed, which demonstrates that the p-WAL media structure improves the writability of the magnetic grains that are particularly difficult to write. From FIG. 7B it can also be seen that not only are the absolute OW values improved but also the OW vs. current characteristics. In comparison to the reference sample without a p-WAL (open triangles), the p-WAL media structure (solid triangles) shows a much sharper OW onset with write current and exhibits a plateau type behavior.

One basic requirement for an overall improvement of disk media performance is the fact that the enhanced writability of p-WAL media is not compromised by the deterioration of other recording properties. Tests have shown that the SNR is unchanged up to p-WAL thicknesses of approximately 4-6 nm for all recording frequencies. For even thicker p-WAL a slight and well-controlled decrease in SNR is observed. However, such large p-WAL thicknesses are not needed for a substantial writability and OW improvement. Tests have also shown that that the $PW_{50}$ vs. p-WAL overlayer thickness dependency exhibits a plateau-like behavior up to thicknesses of about 2-4 nm depending on the alloy composition, above which $PW_{50}$ begins to increase, i.e., deteriorate. However, for materials with large $H_0$, such as $CoPt_{16}Cr_{18}B_8$, which are difficult to write even for today's state of the art write heads, a significant improvement in both SNR and $PW_{50}$ has been observed. This would enable high-anisotropy MAG layer materials with potentially very good recording properties to be used in combination with p-WAL to make p-WAL media structures according to the present invention.

Bit error rate (BER) data have also been obtained as a function of recording density for p-WAL media with the overlayer geometry (FIG. 5A) in comparison to a reference media structure without p-WAL. A substantial improvement in BER over the entire density range was found for the p-WAL media structure. For intermediate densities the BER is improved by more than an order of magnitude, and even for the highest densities tested, the improvements are consistently half an order of magnitude.

The p-WAL materials tested were $CoCr_{31}$ and $CoCr_{34}$. However, the CoCr composition suitable for use as the p-WAL is Cr between approximately 28 to 40 at. %. In addition a $Co_{62}Cr_{18}Ru_{20}$ alloy was tested and showed improved overwrite similar to $CoCr_{31}$ and $CoCr_{34}$. The CoCrRu alloy composition suitable for use as the p-WAL is $(Co_{100-x}Cr_x)_{100-y}Ru_y$ with x between approximately 20 and 35, and y between approximately 10 and 30. The p-WAL material should have a Curie temperature less than the lowest operating temperature of the disk drive and couple ferromagnetically with the MAG layer with which it is in contact. Thus other CoCr based ternary and quaternary alloy materials may also be selected so long as the Curie temperature is below the lowest disk drive operating temperature. Indeed, if the MAG layer is a ferromagnetic alloy of one or more of Co, Ni and Fe then the p-WAL can be any ferromagnetic alloy of one or more of Co, Ni and Fe, but with a specific composition selected to assure that it has a Curie temperature below the lowest operating temperature of the disk drive.

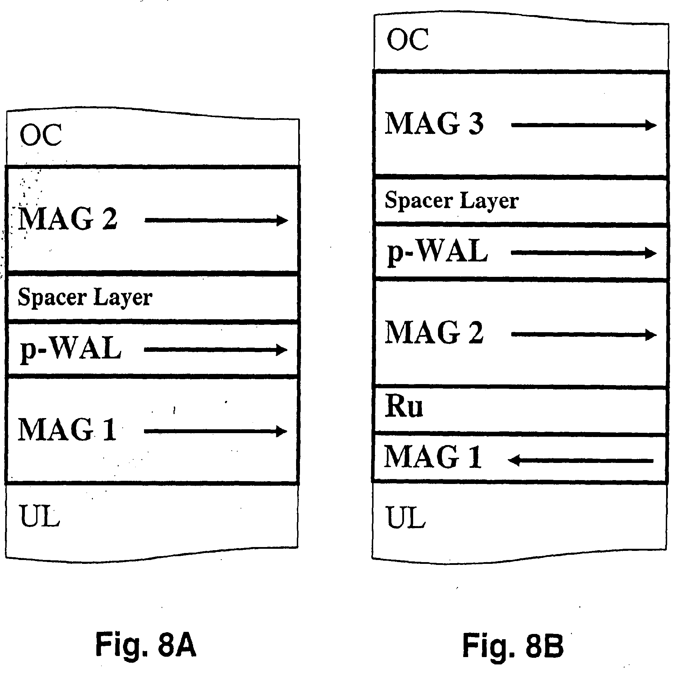

In addition to its applicability to an AFC structure as the magnetic layer (MAG), as shown in FIGS. 5A-5B, the media structures of the present invention are also fully applicable to those where the magnetic layer (MAG) is a conventional single layer, essentially as depicted in FIGS. 1A-1B. The media structures according to the present invention with the write assist layer exchange coupled to the magnetic layer are also fully applicable to a laminated magnetic layer with two or more magnetic films with spacer films between the magnetic films, as described in US patent 5,051,288, and to a laminated AFC magnetic layer, as described in published U.S. patent application US 2002/0098390 A1. In the case of a laminated structure as the MAG layer, the p-WAL may be in contact with either the upper or lower magnetic film. FIG. 8A depicts the preferred laminated magnetic layer embodiment with the p-WAL on top of the lower magnetic film (MAG1) beneath the spacer layer, because MAG1 is located farther from the write head than MAG2 and would thus be more difficult to write. In the case of a laminated AFC structure as the magnetic layer wherein the AFC structure is separated from an upper magnetic film (MAG3) by a spacer layer that does not provide antiferromagnetic coupling (FIG. 8B), the p-WAL may be in contact with the upper AFC film (the intermediate magnetic film MAG2) or the upper magnetic film MAG3 and thus be located above or below MAG2 or above or below MAG3. FIG. 8B depicts the preferred laminated AFC magnetic layer embodiment with the p-WAL on top of MAG2 because MAG2 is located farther from the write head than MAG3 and would thus be more difficult to write.

## Claims

1. A magnetic recording medium comprising:

   a substrate;
   a recording layer on the substrate and comprising a ferromagnetic material having a remanent magnetic moment after exposure to an applied magnetic field; and
   a write assist layer on the substrate and comprising a ferromagnetic material in a paramagnetic state, the write assist layer having a thickness greater than 1 nm, the write assist layer and the recording layer being in contact and exchange coupled.

2. The medium of claim 1 wherein the recording layer is between the write assist layer and the substrate and the write assist layer is on top of the recording layer.

3. The medium of claim 1 wherein the recording layer is an antiferromagnetically coupled recording layer comprising a lower ferromagnetic film and an upper ferromagnetic film separated by an antiferromagnetically coupling film, the lower and upper ferromagnetic films having antiparallel magnetic moments after exposure to an applied magnetic field, and wherein the write assist layer is in contact with the upper ferromagnetic film.

4. The medium of claim 3 wherein the write assist layer is located on top of the upper ferromagnetic film.

5. The medium of claim 1 wherein the recording layer is a laminated recording layer comprising a lower ferromagnetic film and an upper ferromagnetic film separated by a nonmagnetic spacer layer, the lower and upper ferromagnetic films having parallel magnetic moments after exposure to an applied magnetic field, and wherein the write assist layer is in contact with the lower ferromagnetic film.

6. The medium of claim 5 wherein the write assist layer is located on top of the lower ferromagnetic film.

7. The medium of claim 1 wherein the recording layer is a laminated antiferromagnetically coupled recording layer comprising (a) a lower ferromagnetic film, (b) an intermediate ferromagnetic film, (c) an antiferromagnetically coupling film between the lower ferromagnetic film and the intermediate ferromagnetic film, (d) a nonmagnetic spacer layer on the intermediate ferromagnetic film, and (e) an upper ferromagnetic film on the nonmagnetic spacer layer and wherein the write assist layer is in contact with the nonmagnetic spacer layer.

8. The medium of claim 7 wherein the write assist layer is located on top of the intermediate ferromagnetic film.

9. The medium of claim 1 wherein the recording layer ferromagnetic material is an alloy comprising Co and Pt, and wherein the write assist layer ferromagnetic material is an alloy comprising Co and Cr.

10. The medium of claim 9 wherein the write assist layer ferromagnetic material is an alloy comprising Co, Cr and Ru.

11. The medium of claim 10 wherein the write assist layer ferromagnetic material is $(Co_{100-x}Cr_x)_{100-y}Ru_y$ with x between approximately 20 and 35 and y between approximately 10 and 30.

12. A magnetic recording disk operable above a preselected temperature for storing magnetically recorded data after exposure to an applied magnetic write field, the disk comprising.
a substrate;
a ferromagnetic recording layer on the substrate and that exhibits a remanent magnetic moment in regions exposed to a first write field; and
a write assist layer on the substrate and comprising a ferromagnetic material in a paramagnetic state having a Curie temperature below said preselected temperature, the write assist layer having a thickness greater than 1 nm, the write assist layer and the recording layer being in contact and exchange coupled.

13. The disk of claim 12 wherein the recording layer is between the write assist layer and the substrate and the write assist layer is on top of the recording layer.

14. The disk of claim 12 wherein the recording layer is an antiferromagnetically coupled recording layer comprising a lower ferromagnetic film and an upper ferromagnetic film separated by an antiferromagnetically coupling film, the lower and upper ferromagnetic films having antiparallel magnetic moments after exposure to a write field, and wherein the write assist layer is in contact with the upper ferromagnetic film.

15. The disk of claim 14 wherein the write assist layer is located on top of the upper ferromagnetic film.

16. The disk of claim 12 wherein the recording layer is a laminated recording layer comprising a lower ferromagnetic film and an upper ferromagnetic film separated by a nonmagnetic spacer layer, the lower and upper ferromagnetic films having parallel magnetic moments after exposure to a write field, and wherein the write assist layer is in contact with the lower ferromagnetic film.

17. The disk of claim 16 wherein the write assist layer is located on top of the lower ferromagnetic film.

18. The disk of claim 12 wherein the recording layer is a laminated antiferromagnetically coupled recording layer comprising (a) a lower ferromagnetic film, (b) an intermediate ferromagnetic film, (c) an antiferromagnetically coupling film between the lower ferromagnetic film and the intermediate ferromagnetic film, (d) a nonmagnetic spacer layer on the intermediate ferromagnetic film, and (e) an upper ferromagnetic film on the nonmagnetic spacer layer and wherein the write assist layer is in contact with the nonmagnetic spacer layer.

19. The disk of claim 17 wherein the write assist layer is located on top of the intermediate ferromagnetic film.

20. The disk of claim 12 wherein the recording layer ferromagnetic material is an alloy comprising Co and Pt, and wherein the write assist layer ferromagnetic material is an alloy comprising Co and Cr.

21. The disk of claim 20 wherein the write assist layer ferromagnetic material is an alloy comprising Co, Cr and Ru.

22. The disk of claim 21 wherein the write assist layer ferromagnetic material is $(Co_{100-x}Cr_x)_{100-y}Ru_y$ with x between approximately 20 and 35 and y between approximately 10 and 30.

**Patentansprüche**

1. Magnetisches Aufzeichnungsmedium, umfassend:

ein Substrat;
eine Aufzeichnungsschicht auf dem Substrat, umfassend ein ferromagnetisches Material, welches nach dem Beaufschlagen mit einem angelegten Magnetfeld ein remanentes magnetisches Moment aufweist; und
eine Schreibhilfsschicht auf dem Substrat, umfassend ein ferromagnetisches Material in einem paramagnetischen Zustand, wobei die Schreibhilfsschicht eine Dicke von mehr als 1 nm aufweist, und wobei die Schreibhilfsschicht und die Aufzeichnungsschicht zueinander in Kontakt stehen und miteinander austausch-gekoppelt sind.

2. Medium nach Anspruch 1, worin die Aufzeichnungsschicht zwischen der Schreibhilfsschicht und dem Substrat angeordnet und die Schreibhilfsschicht auf der Aufzeichnungsschicht angeordnet ist.

3. Medium nach Anspruch 1, worin die Aufzeichnungsschicht eine antiferromagnetisch gekoppelte Aufzeichnungsschicht ist, umfassend einen unteren ferromagnetischen Film und einen oberen ferromagnetischen Film, die durch einen antiferromagnetisch gekoppelten Film voneinander getrennt sind, wobei der untere und der obere ferromagnetische Film antiparallele magnetische Momente aufweisen, nach dem diese einem angelegten Magnetfeld ausgesetzt waren und worin die Schreibhilfsschicht in Kontakt mit dem oberen ferromagnetischen Film steht.

4. Medium nach Anspruch 3, worin die Schreibhilfsschicht auf dem oberen, ferromagnetischen Film angeordnet ist.

5. Medium nach Anspruch 1, worin die Aufzeichnungsschicht eine laminierte Aufzeichnungsschicht ist, welche einen unteren ferromagnetischen Film und einen oberen ferromagnetischen Film umfasst, die durch eine nichtmagnetische Abstandsschicht voneinander getrennt sind, wobei der obere und der untere ferromagnetische Film parallele magnetische Momente aufweisen, nachdem diese einem angelegten Magnetfeld ausgesetzt waren und worin die Schreibhilfsschicht in Kontakt mit dem unteren ferromagnetischen Film steht.

6. Medium nach Anspruch 5, worin die Schreibhilfsschicht auf dem unteren ferromagnetischen Film angeordnet ist.

7. Medium nach Anspruch 1, worin die Aufzeichnungsschicht eine laminierte, antiferromagnetisch gekoppelte Aufzeichnungsschicht ist, die (a) einen unteren ferromagnetischen Film, (b) einen dazwischenliegenden ferromagnetischen Film, (c) einen antiferromagnetisch gekoppelten Film zwischen dem unteren ferromagnetischen Film und dem dazwischenliegenden ferromagnetischen Film, (d) eine nichtmagnetische Abstandsschicht auf dem dazwischenliegenden ferromagnetischen Film, und (e) einen oberen ferromagnetischen Film auf der nichtmagnetischen Abstandsschicht umfasst und worin die Schreibhilfsschicht in Kontakt mit der nichtmagnetischen Abstandsschicht steht.

8. Medium nach Anspruch 7, worin die Schreibhilfsschicht auf dem dazwischenliegenden ferromagnetischen Film angeordnet ist.

9. Medium nach Anspruch 1, worin das ferromagnetische Material der Aufzeichnungsschicht eine Legierung umfassend Co und Pt ist und worin das ferromagnetische Material der Schreibhilfsschicht eine Legierung umfassend Co und Cr ist.

10. Medium nach Anspruch 9, worin das ferromagnetische Material der Schreibhilfsschicht eine Legierung umfassend Co, Cr und Ru ist.

11. Medium nach Anspruch 10, worin das ferromagnetische Material der Schreibhilfsschicht $(Co_{100-x}Cr_x)_{100-y}Ru_y$ ist, wobei x ungefähr zwischen 20 und 35 und y etwa zwischen 10 und 30 liegt.

12. Magnetaufzeichnungsplatte, die oberhalb einer vorbestimmten Temperatur zur Speicherung magnetisch aufgezeichneter Daten betriebsbereit ist, nachdem diese einem angelegten Magnetfeld ausgesetzt war, wobei die Platte Folgendes umfasst:

ein Substrat;
eine ferromagnetische Aufzeichnungsschicht auf dem Substrat, welches ein remanentes magnetisches Moment in einem ersten Schreibfeld ausgesetzten Bereichen aufweist; und
eine Schreibhilfsschicht auf dem Substrat, umfassend ein ferromagnetisches Material in einem paramagnetischen Zustand, welches eine unterhalb der vorbestimmten Temperatur liegende Curie-Temperatur aufweist, wobei die Schreibhilfsschicht eine Dicke von mehr als 1 nm aufweist, und wobei die Schreibhilfsschicht und die Aufzeichnungsschicht in Kontakt zueinander stehen und miteinander austausch-gekoppelt sind.

13. Platte nach Anspruch 12, worin die Aufzeichnungsschicht zwischen der Schreibhilfsschicht und dem Substrat angeordnet ist und sich die Schreibhilfsschicht auf der Aufzeichnungsschicht angeordnet ist.

14. Platte nach Anspruch 12, worin die Aufzeichnungsschicht eine antiferromagnetisch gekoppelte Aufzeichnungsschicht ist, welche einen unteren ferromagnetischen Film und einen oberen ferromagnetischen Film umfasst, die durch einen antiferromagnetisch gekoppelten Film voneinander getrennt sind, wobei der untere und der obere ferromagnetische Film antiparallele magnetische Momente aufweisen, nachdem diese einem Schreibfeld ausgesetzt waren und worin die Schreibhilfsschicht in Kontakt mit dem oberen ferromagnetischen Film steht.

**15.** Platte nach Anspruch 14, worin die Schreibhilfsschicht auf dem oberen ferromagnetischen Film angeordnet ist.

**16.** Platte nach Anspruch 12, worin die Aufzeichnungsschicht eine laminierte Aufzeichnungsschicht ist, welche einen unteren ferromagnetischen Film und einen oberen ferromagnetischen Film umfasst, die voneinander durch eine nichtmagnetische Abstandsschicht getrennt sind, wobei der obere und der untere ferromagnetische Film parallele magnetische Momente aufweisen, nachdem diese einem Schreibfeld ausgesetzt waren und worin die Schreibhilfsschicht in Kontakt mit dem unteren ferromagnetischen Film steht.

**17.** Platte nach Anspruch 16, worin die Schreibhilfsschicht auf dem unteren ferromagnetischen Film angeordnet ist.

**18.** Platte nach Anspruch 12, worin die Aufzeichnungsschicht eine laminierte, antiferromagnetisch gekoppelte Aufzeichnungsschicht ist, die (a) einen unteren ferromagnetischen Film, (b) einen dazwischenliegenden ferromagnetischen Film, (c) einen antiferromagnetisch gekoppelten Film zwischen dem unteren ferromagnetischen Film und dem dazwischenliegenden ferromagnetischen Film, (d) eine nichtmagnetische Abstandsschicht auf dem dazwischenliegenden ferromagnetischen Film, und (e) einen oberen ferromagnetischen Film auf der nichtmagnetischen Abstandsschicht umfasst und worin die Schreibhilfsschicht in Kontakt mit der nichtmagnetischen Abstandsschicht steht.

**19.** Platte nach Anspruch 17, worin die Schreibhilfsschicht auf dem dazwischenliegenden ferromagnetischen Film angeordnet ist.

**20.** Platte nach Anspruch 12, worin das ferromagnetische Material der Aufzeichnungsschicht aus einer Legierung bestehend aus Co und Pt ist und worin das ferromagnetische Material der Schreibhilfsschicht eine Legierung ist, welche Co und Cr umfasst.

**21.** Platte nach Anspruch 20, worin das ferromagnetische Material der Schreibhilfsschicht eine Legierung umfassend Co, Cr und Ru ist.

**22.** Platte nach Anspruch 21, worin das ferromagnetische Material der Schreibhilfsschicht $(Co_{100-x}Cr_x)_{100-y}Ru_y$ ist, wobei x ungefähr zwischen 20 und 35 und y etwa zwischen 10 und 30 beträgt.

**Revendications**

**1.** Support d'enregistrement magnétique comprenant:

un substrat;
une couche d'enregistrement sur le substrat et comprenant un matériau ferromagnétique ayant un moment magnétique rémanent après exposition à un champ magnétique appliqué; et
une couche d'aide à l'écriture sur le substrat et comprenant un matériau ferromagnétique à l'état paramagnétique, la couche d'aide à l'écriture ayant une épaisseur supérieure à 1 nm, la couche d'aide à l'écriture et la couche d'enregistrement étant en contact et couplées en échange.

**2.** Support selon la revendication 1, dans lequel la couche d'enregistrement est située entre la couche d'aide à l'écriture et le substrat et la couche d'aide à l'écriture est sur le haut de la couche d'enregistrement.

**3.** Support selon la revendication 1, dans lequel la couche d'enregistrement est une couche d'enregistrement couplée anti-ferromagnétiquement comprenant un film ferromagnétique inférieur et un film ferromagnétique supérieur séparés par un film de couplage antiferromagnétique, les films ferromagnétiques inférieur et supérieur ayant des moments magnétiques antiparallèles après exposition à un champ magnétique appliqué et où la couche d'aide à l'écriture est en contact avec le film ferromagnétique supérieur.

**4.** Support selon la revendication 3, dans lequel la couche d'aide à l'écriture est située sur le haut du film ferromagnétique supérieur.

**5.** Support selon la revendication 1, dans lequel la couche d'enregistrement est une couche d'enregistrement stratifiée comprenant un film ferromagnétique inférieur et un film ferromagnétique supérieur séparés par une couche d'espacement non magnétique, les films ferromagnétiques inférieur et supérieur ayant des moments magnétiques parallèles après exposition à un champ magnétique appliqué et où la couche d'aide à l'écriture est en contact avec le film ferromagnétique inférieur.

**6.** Support selon la revendication 5, où la couche d'aide à l'écriture est située sur le haut du film ferromagnétique inférieur.

**7.** Support selon la revendication 1, où la couche d'enregistrement est une couche d'enregistrement stratifiée couplée anti-ferromagnétiquement comprenant (a) un film ferromagnétique inférieur, (b) un film ferromagnétique intermédiaire, (c) un film de couplage antiferromagnétique situé entre le film ferromagnétique inférieur et le film ferromagnétique intermédiaire, (d) une couche d'espacement non magnétique sur le film ferromagnétique intermédiaire, et (e) un film ferromagnétique supérieur sur la couche d'espacement non magnétique et dans lequel la couche d'aide à l'écriture est en contact avec la couche d'espacement non magnétique.

8. Support selon la revendication 7, dans lequel la couche d'aide à l'écriture est située sur le haut du film ferromagnétique intermédiaire.

9. Support selon la revendication 1, dans lequel le matériau ferromagnétique de la couche d'enregistrement est un alliage comprenant Co et Pt, et dans lequel le matériau ferromagnétique de la couche d'aide à l'écriture est un alliage comprenant Co et Cr.

10. Support selon la revendication 9, dans lequel le matériau ferromagnétique de la couche d'aide à l'écriture est un alliage comprenant Co, Cr et Ru.

11. Support selon la revendication 10, dans lequel le matériau ferromagnétique de la couche d'aide à l'écriture est $(Co_{100-x}Cr_x)_{100-y}Ru_y$ avec x qui est situé entre environ 20 et 35 et y entre environ 10 et 30.

12. Disque d'enregistrement magnétique pouvant fonctionner au-dessus d'une température présélectionnée pour stocker magnétiquement des données enregistrées après exposition à un champ d'écriture magnétique appliqué, le disque comprenant:

    un substrat;
    une couche d'enregistrement ferromagnétique sur le substrat et qui présente un moment magnétique rémanent dans des régions exposées à un premier champ d'écriture; et
    une couche d'aide à l'écriture sur le substrat et comprenant un matériau ferromagnétique à l'état paramagnétique, ayant une température de Curie située en dessous de ladite température présélectionnée, la couche d'aide à l'écriture ayant une épaisseur supérieure à 1 nm, la couche d'aide à l'écriture et la couche d'enregistrement étant en contact et couplées en échange.

13. Disque selon la revendication 12, dans lequel la couche d'enregistrement est située entre la couche d'aide à l'écriture et le substrat et la couche d'aide à l'écriture est sur le haut de la couche d'enregistrement.

14. Disque selon la revendication 12, dans lequel la couche d'enregistrement est une couche d'enregistrement couplée antiferromagnétiquement comprenant un film ferromagnétique inférieur et un film ferromagnétique supérieur séparés par un film de couplage antiferromagnétique, les films ferromagnétiques inférieur et supérieur ayant des moments magnétiques antiparallèles après exposition à un champ d'écriture et où la couche d'aide à l'écriture est en contact avec le film ferromagnétique supérieur.

15. Disque selon la revendication 14, dans lequel la couche d'aide à l'écriture est située sur le haut du film ferromagnétique supérieur.

16. Disque selon la revendication 12, dans lequel la couche d'enregistrement est une couche d'enregistrement stratifiée comprenant un film feromagnétique inférieur et un film ferromagnétique supérieur séparés par une couche d'espacement non magnétique, les films ferromagnétiques inférieur et supérieur ayant des moments magnétiques parallèles après exposition à un champ d'écriture et où la couche d'aide à l'écriture est en contact avec le film ferromagnétique inférieur.

17. Disque selon la revendication 16, où la couche d'aide à l'écriture est située sur le haut du film ferromagnétique inférieur.

18. Disque selon la revendication 12, où la couche d'enregistrement est une couche d'enregistrement stratifiée couplée anti-ferromagnétiquement comprenant (a) un film ferromagnétique inférieur, (b) un film ferromagnétique intermédiaire, (c) un film de couplage antiferromagnétique situé entre le film ferromagnétique inférieur et le film ferromagnétique intermédiaire, (d) une couche d'espacement non magnétique sur le film ferromagnétique intermédiaire, et (e) un film ferromagnétique supérieur sur la couche d'espacement non magnétique et dans lequel la couche d'aide à l'écriture est en contact avec la couche d'espacement non magnétique.

19. Disque selon la revendication 17, dans lequel la couche d'aide à l'écriture est située sur le haut du film ferromagnétique intermédiaire.

20. Disque selon la revendication 12, dans lequel le matériau ferromagnétique de la couche d'enregistrement est un alliage comprenant Co et Pt, et dans lequel le matériau ferromagnétique de la couche d'aide à l'écriture est un alliage comprenant Co et Cr.

21. Disque selon la revendication 20, dans lequel le matériau ferromagnétique de la couche d'aide à l'écriture est un alliage comprenant Co, Cr et Ru.

22. Disque selon la revendication 21, dans lequel le matériau ferromagnétique de la couche d'aide à l'écri-

ture est $(Co_{100-x}Cr_x)_{100-y}Ru_y$ avec x qui est situé entre environ 20 et 35 et y entre environ 10 et 30.

$$H_{appl} = 0$$

$$H_{appl} = - H_{write}$$

$$\longleftarrow$$

| p-WAL | |
|---|---|
| MAG | $\longrightarrow$ |

| p-WAL | $\longleftarrow$ |
|---|---|
| MAG | $\longrightarrow$ |

**Fig. 1A**

**Fig. 1B**

Fig. 2

EP 1 453 038 B1

Fig. 3B

Fig. 3A

14

**Fig. 4A**

**Fig. 4B**

EP 1 453 038 B1

EP 1 453 038 B1

| OC |
|---|
| p-WAL $\longrightarrow$ |
| MAG 2 $\longrightarrow$ |
| Ru |
| MAG 1 $\longleftarrow$ |
| UL |

**Fig. 5A**

| OC |
|---|
| MAG 2 $\longrightarrow$ |
| p-WAL $\longrightarrow$ |
| Ru |
| MAG 1 $\longleftarrow$ |
| UL |

**Fig. 5B**

EP 1 453 038 B1

**Fig. 6B**

$K_uV/k_BT$ vs overlayer thickness (nm)

**Fig. 6A**

$H_0$ (kOe) vs overlayer thickness (nm)

Fig. 7B

Fig. 7A

Fig. 8B

Fig. 8A